Europäisches Patentamt

European Patent Office

Office européen des brevets

(19)

(11) Veröffentlichungsnummer: **0 129 140**

**A1**

(12) ## EUROPÄISCHE PATENTANMELDUNG

(21) Anmeldenummer: **84106386.0**

(22) Anmeldetag: **05.06.84**

(51) Int. Cl.³: **G 05 D 23/19**
**H 02 J 13/00**

(30) Priorität: **16.06.83 DE 3321701**

(43) Veröffentlichungstag der Anmeldung:
**27.12.84 Patentblatt 84/52**

(84) Benannte Vertragsstaaten:
**AT BE CH FR GB LI LU NL SE**

(71) Anmelder: **Gassmann, Gerhard-Günter**
**Vogelsang 5**
**D-7266 Neuweiler 2(DE)**

(72) Erfinder: **Gassmann, Gerhard-Günter**
**Vogelsang 5**
**D-7266 Neuweiler 2(DE)**

(74) Vertreter: **Vogel, Georg**
**Hermann-Essig-Strasse 35**
**D-7141 Schwieberdingen(DE)**

(54) **Fernsteuerdatenempfänger zur Energieeinsparung bei Nachtstromspeicherheizungen.**

(57) Die Erfindung befaßt sich mit einem Fernsteuer-datenempfänger zur Energieeinsparung bei Nachtstroms-peicherheizungen, bei dem ein einer Nachtstromspeicher-heizung zugeordneter Datenempfänger die Fern-steuersendung eines Senders (Rundfunksender, Elek-trizitätswerk) empfängt, der neben der Hauptsendung (Rundfunkprogramm, Sendung elektrischer Energie) zusätzliche bestimmten räumlichen Regionen (z.B. Norbaden, Raum Frankfurt oder dgl.) zugeordnete Temperaturvoraussagedaten sendet, die mit Kenndaten für die jeweilige Region verkoppelt sind und der Empfänger nur diese verkoppelten Zusatzdaten weiterverarbeitet, indem er die Region-Kenndaten vergleicht mit den einprogrammierten Region-Kenndaten des Standortes der Heizung und nur bei Übereinstimmung dieser Region-Kenndaten die zugeordneten Temperaturvoraussagedaten in einem Datenspeicher speichert und zur Dosierung der mit Nachtstrom aufzunehmenden Wärmeenergie an die Aufladesteuerung der Nachtstroms-peicherheizung weitergibt.

Fig.1

EP 0 129 140 A1

## Fernsteuerdatenempfänger zur Energieeinsparung bei Nachtstromspeicherheizungen

Nachtstromspeicherheizungen haben die Aufgabe, mit billigem Nachtstrom einen in einer Nachtstromspeicherheizung enthaltenen Wärmespeicher, der z.B. aus Steinen besteht und nach außen wärmeisoliert ist, aufzuheizen. Am Tag wird diese Speicherwärme langsam wieder abgegeben. Die Wärmeabgabe kann z.B. durch eine Ventilation erhöht werden. Im allgemeinen ist die Wärmeabgabe infolge nicht vollständiger Isolation auch ohne Ventilation vorhanden. Folgt nun einer Kaltwetterperiode ein warmer Tag, so ist infolge der vorgewählten, der bisherigen Witterung angepaßten Auflade-Einstellung soviel Wärme gespeichert, wie sie in dieser Menge gar nicht benötigt wird. Der Raum wird zu warm, weil die Isolation der Nachtstromspeicherheizung nicht die gespeicherte Wärme zurückhält. Man ist gezwungen, z.B. durch Fenster öffnen die Wärme abzuleiten. Dieser Nachteil könnte theoretisch durch wesentlich bessere Wärmeisolation des Nachtstromspeicherofens vermieden werden. Eine so gute Isolation ist aber technisch kaum realisierbar und wäre auch viel zu teuer.

Zur Vermeidung dieses Nachteiles schlägt die Erfindung einen Fernsteuerdatenempfänger zur Energieeinsparung bei Nachtstromspeicherheizungen vor, der dadurch gekennzeichnet ist, daß ein einer Nachtstromspeicherheizung zugeordneter Datenempfänger die Fernsteuersendung eines Senders (Rundfunksen-

A 5488 — 2 — 0129140

ders, Elektrizitätswerk) empfängt, der neben der Hauptsendung (Rundfunkprogramm, Sendung elektrischer Energie) zusätzliche, bestimmten räumlichen Regionen (z.B. Nordbaden, Raum Frankfurt oder dgl.) zugeordnete Temperaturvoraussagedaten sendet, die mit Kenndaten für die jeweilige Region verkoppelt sind und der Empfänger nur diese verkoppelten Zusatzdaten weiter verarbeitet, indem er die Region-Kenndaten vergleicht mit den einprogrammierten Region-Kenndaten des Standortes der Heizung und nur bei Übereinstimmung dieser Region-Kenndaten die zugeordneten Temperaturvoraussagedaten in einem Datenspeicher speichert und zur Dosierung der mit Nachtstrom aufzunehmende Wärmeenergie an die Aufladesteuerung der Nachtstromspeicherheizung weitergibt.

In Weiterbildung der Erfindung wird zur Dosierung der Wärmeenergie vorgeschlagen, daß dem Datenspeicher ein Digital-Analog-Wandler nachgeschaltet ist und die von diesem abgegebene Steuerspannung die Menge der aufzunehmenden Wärme steuert, indem sie z.B. die Aufladedauer bestimmt.

Die Erfindung hat den wesentlichen Vorteil, daß noch zu einem sehr späten Zeitraum, z.B. um Mitternacht, die Nachtstromspeicherheizungen des Sendebereiches regional abhängig von der vom Wetteramt oder einem anderen Institut vorausgesagten mittleren Temperaturen der nachfolgenden 18 – 24 Stunden als Kriterium zum Aufladen mit Nachtstrom-Wärmeenergie dient. Die Folge ist, daß die Wahrscheinlichkeit von Energieverschwendung stark gemindert werden kann.

Das Elektrizitätswerk sendet bereits Umschaltdaten zur Umschaltung der Stromzähler von Tagstromzählung auf Nachtstromzählung. Diese Umschaltdaten sind Frequenzen, die wesentlich höher sind als die Frequenz des Wechselstromes und können dem Wechselstromnetz von einer vom Elektrizitätswerk gestellten Datenempfangsschaltung abgegeben werden, um
die Nachtstromspeicherheizung erst nach Umschaltung der
Zähler auf Nachtstrom einzuschalten. Bei Rückschaltung auf
Tagstrom wird .dann die Heizung von diesem Steuersignal
wieder abgeschaltet. Diese bekannte Ein- und Abschaltung der
Heizung ist aber unabhängig von der Witterung des nachfolgenden Tages. Erst durch die Erfindung wird eine Dosiersteuerung, die von der Temperaturvoraussage abhängt, erreicht. Da die zu erwartende Witterung sehr abhängig ist von
der jeweiligen räumlichen Region, werden erfindungsgemäß die
Temperaturvoraussagedaten mit Region-Kenndaten verbunden. Es
wird also eine Vielzahl von Temperaturvoraussagedaten für
die verschiedenen Regionen gesendet, die verbunden sind mit
den jeweiligen Region-Kenndaten. Erfindungsgemäß vergleicht
der Empfänger in einer Vergleichsschaltung die gesendeten
Region-Kenndaten mit einprogrammierten Region-Kenndaten des
Standortes der Heizung. Er ist dadurch in der Lage, nur jene
Temperaturvoraussagedaten anzunehmen und an die Heizungssteuerung weiterzuleiten, die der Region zugeordnet sind, in
der der Standort .der betreffenden Heizung liegt.

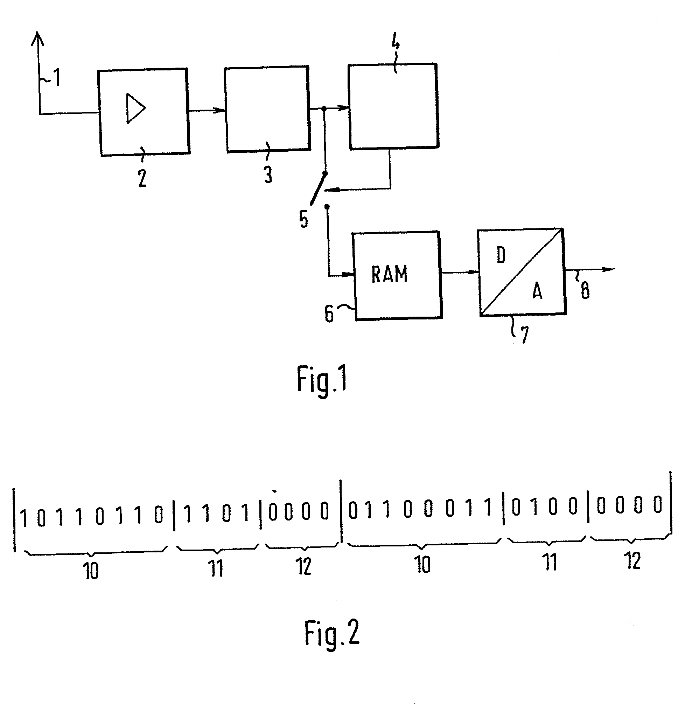

In Fig. 1 ist das Blockschaltbild eines Fernsteuerdatenempfängers gezeigt. Darin ist 1 die Antenne, die die Sendung
des betreffenden Rundfunksenders aufnimmt. 2 ist ein selektiver Verstärker bzw. Überlagerungsempfänger, der auf die
Frequenz des .Senders abgestimmt ist. Im allgemeinen empfiehlt es sich, einen Langwellensender als Datensender
vorzusehen, weil dessen Frequenzen kaum durch Betonkellerwände abgeschirmt werden. 3 ist der Datendemodulator (z.B.
ein Phasendemodulator). Ist z.B. der Rundfunksender mit
Musikprogramm amplitudenmoduliert, so kann er mit den langsam ausgesendeten Temperaturdaten phasenmoduliert werden, ohne dadurch das Hauptprogramm zu stören. 4 ist die Vergleichsschaltung, mit der die empfangenen Regional-Kenndaten
verglichen werden mit den einprogrammierten Regional-Kenndaten des Standortes. 4 kann aber auch ein Mikroprozessor
sein, der diesen Vergleich vornimmt. Bei Übereinstimmung
geht an den Schalter 5, der auch ein elektronischer Schalter
sein kann, ein Schließbefehl, durch den die nachfolgenden
Temperaturvoraussagedaten in den Temperaturdatenspeicher 6
gelangen. Dieser Speicher kann ein Schieberegister sein, in
das die Daten eingeschoben werden. Es kann aber auch ein
RAM-Speicher einer Mikroprozessoreinrichtung sein. Es empfiehlt sich, einen Speicher zu verwenden, der durch kurzen
Stromausfall nicht gelöscht wird, z.B. ein EEPROM.

7 ist ein Digital-Analog-Wandler, dessen Steuerspannung 8
zur Steuerung der aufzunehmenden Wärmemenge dient. Dies kann
z.B. dadurch erfolgen, daß mit dieser Steuerspannung die
Aufladedauer bestimmt wird. Eine andere Möglichkeit ist die
Variation der Aufnahmeleistung z.B. durch Zu- oder Abschaltung von Teilen der Heizung.

Fig. 2 zeigt eine Folge von Daten dieser Art. Hier sei
angenommen, daß das Region-Kennsignal 10 aus 8 Bit besteht
und somit 256 verschiedene Regionen versorgt werden können.
Nach diesen Region-Kenndaten folgt ein 4 Bit Datenwort 11
für die Temperaturvoraussagedaten. Man kann also 16 verschiedene Temperaturwerte übertragen. Eine höhere Genauigkeit ist bei der Vorhersage sowieso kaum möglich. Jeder Wert
von 0 bis 16 ist natürlich einem bestimmten Temperaturbereich zugeordnet, z.B. der Wert 16 der höchsten Außentemperatur von z. B. 16° bis 19°, bei der nur in Sonderfällen
noch die Heizung laufen soll. Der Wert 0 symbolisiert z.B.
eine Außentemperatur von z.B. -22° bis -25° als geringste Tagesaußentemperatur. Nach diesen 4 Bit folgen noch 4 Bit 12
mit dem Wert Null. Sie bilden die Abschlußdaten zur Abgrenzung zu den nachfolgenden Daten.

Eine andere, an sich bekannte Übertragungsart, als die oben
genannte Phasenmodulation für die Zusatzdaten, besteht
darin, die Daten mit einem Pilotsignal zu übertragen, das an
der Frequenzgrenze des vom Rundfunksender abgestrahlten
Modulationssignals liegt.

Ist der Sender das Elektrizitätswerk, so ist die Anordnung
nach Fig. 1 auch verwendbar, nur entfällt dann die Antenne
und statt dessen ist am Eingang eine Frequenzweiche, die die
220 Volt Versorgungsfrequenz von der Trägerfrequenz trennt,
mit der das Elektrizitätswerk die Daten auf seinen Leitungen
überträgt.

A 5488
v/p

22. Mai 1984  0129140

Gerhard-Günter Gaßmann
Vogelsang 5

7266  Neuweiler  2

– 1 –

<u>A n s p r ü c h e</u>

1. Fernsteuerdatenempfänger  zur  Energieeinsparung  bei
Nachtstromspeicherheizungen,
dadurch gekennzeichnet,
daß ein einer Nachtstromspeicherheizung zugeordneter
Datenempfänger  die  Fernsteuersendung  eines  Senders
(Rundfunksender, Elektrizitätswerk) empfängt, der neben
der Hauptsendung (Rundfunkprogramm, Sendung elektrischer  Energie)  zusätzliche,  bestimmten  räumlichen
Regionen  (z.B.  Nordbaden,  Raum  Frankfurt  oder  dgl.)
zugeordnete Temperaturvoraussagedaten sendet, die mit
Kenndaten für die jeweilige Region verkoppelt sind und
der Empfänger nur diese verkoppelten Zusatzdaten weiter
verarbeitet, indem er die Region-Kenndaten vergleicht
mit den einprogrammierten Region-Kenndaten des Standortes der Heizung und nur bei Übereinstimmung dieser
Region-Kenndaten die zugeordneten Temperaturvoraussagedaten in einem Datenspeicher speichert und zur Dosierung der mit Nachtstrom aufzunehmenden Wärmeenergie an
die  Aufladesteuerung  der  Nachtstromspeicherheizung
weitergibt.

2. Fernsteuerdatenempfänger nach Anspruch 1,
   dadurch gekennzeichnet,
   daß die Daten zu Datenpaketen zusammengefaßt sind, bei
   denen zuerst die Region-Kenndaten, danach die Temperaturvoraussagedaten dieser Region und danach Abschlußdaten (z.B. einige Nullen) zur Abgrenzung zu den nachfolgenden Region-Kenndaten einer anderen Region gesendet werden.

3. Fernsteuerdatenempfänger nach Anspruch 1,
   dadurch gekennzeichnet,
   daß dem Datenspeicher ein Digital-Analog-Wandler nachgeschaltet ist und die von diesem abgegebene Steuerspannung die Menge der aufzunehmenden Wärme steuert, in
   dem sie z.B. die Aufladedauer bestimmt.

Fig.1

| 1 0 1 1 0 1 1 0 | 1 1 0 1 | 0 0 0 0 | 0 1 1 0 0 0 1 1 | 0 1 0 0 | 0 0 0 0 |
|:---:|:---:|:---:|:---:|:---:|:---:|
| 10 | 11 | 12 | 10 | 11 | 12 |

Fig.2

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | ELEKTROWÄRME INTERNATIONAL, Band 26, Nr. 9, September 1968, Seiten 309-312, Essen, DE; H. JÜTTEMANN: "Aufladeregelung von Elektrospeicherheizgeräten mit Hilfe von Rundsteueranlagen" * Seite 309, rechte Spalte, Zeile 10 - Seite 310, linke Spalte, Zeile 12; Abbildung 3 * | 1,3 | G 05 D 23/19 H 02 J 13/00 |
| Y | US-A-4 360 881 (J. MARTINSON) * Zusammenfassung; Spalte 2, Zeile 56 - Spalte 4, Zeile 19; Abbildungen 1,2 * | 1 | |
| Y | US-A-4 314 454 (HITACHI) * Zusammenfassung; Spalte 2, Zeile 62 - Spalte 3, Zeile 30; Abbildung 4 * | 3 | |
| A | DE-A-2 912 235 (VIESSMAN) * Seite 1, Zeile 1 - Seite 2, Zeile 16; Abbildungen 1-3 * | 2,3 | RECHERCHIERTE SACHGEBIETE (Int. Cl. ³)  G 05 D H 02 J H 04 B |
| A | FR-A-2 486 208 (COFRETH) * Seite 2, Zeilen 11-14 * | 1 | |

Der vorliegende Recherchenbericht wurde für alle Patentansprüche erstellt.

| Recherchenort DEN HAAG | Abschlußdatum der Recherche 11-09-1984 | Prüfer HELOT H.V. |
|---|---|---|